(19) **Europäisches Patentamt European Patent Office Office européen des brevets**

(11) **EP 4 632 089 A1**

(12) **EUROPEAN PATENT APPLICATION**
published in accordance with Art. 153(4) EPC

(43) Date of publication:
**15.10.2025 Bulletin 2025/42**

(21) Application number: **23901076.2**

(22) Date of filing: **06.12.2023**

(51) International Patent Classification (IPC):
**C22B 7/00** (2006.01)    **C22B 26/12** (2006.01)
**C22B 5/02** (2006.01)

(52) Cooperative Patent Classification (CPC):
**C22B 5/02; C22B 7/00; C22B 26/12**

(86) International application number:
**PCT/KR2023/019941**

(87) International publication number:
**WO 2024/123058 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2022 KR 20220170875**

(71) Applicants:
• **POSCO Holdings Inc.**
**Pohang-si, Gyeongsangbuk-do 37859 (KR)**
• **POSCO Co., Ltd**
**Pohang-si, Gyeongsangbuk-do 37859 (KR)**

(72) Inventors:
• **LEE, Juseung**
**Pohang-si, Gyeongsangbuk-do 37859 (KR)**
• **KIM, Chun**
**Pohang-si, Gyeongsangbuk-do 37859 (KR)**
• **HAN, Sangwoo**
**Pohang-si, Gyeongsangbuk-do 37859 (KR)**
• **KIM, Wan-Yi**
**Pohang-si, Gyeongsangbuk-do 37859 (KR)**
• **PARK, Joongkil**
**Pohang-si, Gyeongsangbuk-do 37859 (KR)**

(74) Representative: **Pfenning, Meinig & Partner mbB Patent- und Rechtsanwälte Theresienhöhe 11a 80339 München (DE)**

(54) **VALUABLE METAL REACTANTS, VALUABLE METAL SHREDS, AND METHOD OF RECOVERING VALUABLE METALS**

(57) The present invention relates to a valuable metal reactant, a valuable metal shredded material, and a method for recovering a valuable metal. The valuable metal reactant of the present invention is a valuable metal reactant including a valuable metal recovered from a waste battery, and includes a first valuable metal-containing material including a magnetic material, a second valuable metal-containing material including a non-magnetic material, a carbon compound including carbon, and residual other impurities, in which the first valuable metal-containing material includes a third valuable metal-containing material and a first lithium compound attached to a surface of the third valuable metal-containing material, and a lithium content of the first lithium compound is 1.5 wt% or more in the first valuable metal-containing material.

FIG. 1

EP 4 632 089 A1

## Description

### [Technical Field]

The present invention relates to a waste battery, and to a valuable metal reactant recovered from waste battery recycling, a valuable metal shredded material, and a method for recovering a valuable metal.

### [Background Art]

As the demand for electric vehicles increases worldwide, the issue of disposing of waste batteries from such electric vehicles is emerging as a social problem. Lithium secondary batteries, which are the main raw material for the waste batteries, contain organic solvents, explosive substances, and heavy metals such as Ni, Co, Mn, and Fe. However, Ni, Co, Mn, and Li have high scarcity value as valuable metals, and the recovery and recycling processes after the disposal of the waste lithium secondary batteries are emerging as an important research field.

Specifically, lithium secondary batteries are primarily composed of copper and aluminum used as current collectors, Li-, Ni-, Co-, and Mn-containing oxides forming a positive electrode material, and graphite used as a negative electrode material, and also include a separator that separates the positive electrode material and the negative electrode material and an electrolyte injected into the separator. As for the solvent and salt constituting the electrolyte, a mixture of carbonate organic substances such as ethylene carbonate and propylene carbonate is used as the solvent, and $LiPF_6$ is used as the salt, for example.

In order to utilize the waste batteries, interest is growing in a waste battery recycling process of crushing the waste batteries to produce intermediate materials, such as waste battery shredded materials or black powder, and then recovering valuable metals through subsequent processes.

Specifically, the main components of waste batteries are composed of expensive and valuable metal elements, such as Ni, Co, Mn, and Li. The waste batteries are, for example, secondary batteries that have reached the end of their life after being used for a cycle of 5 to 10 years. Recycling the main components of the waste batteries is essential from both environmental and cost perspectives. The waste batteries undergo conventional processes, such as shredding, crushing, or gravity sorting, to produce a mixture of the positive and negative electrode materials in the form of black powder as an intermediate product. The valuable metals essential for battery production are recovered from the black powder produced in this way through hydrometallurgical processes, such as leaching, solvent extraction, or crystallization. This makes it possible to facilitate the supply of raw materials and drastically reduce battery manufacturing costs.

As a method for recovering waste batteries, a method was studied in which graphite is first separated and then magnetic separation is performed to recover valuable metals in the sorting process of reactants that have undergone firing heat treatment. However, when graphite is separated first, a large amount of lithium compounds in the form of fine particles, such as $LiAlO_2$, $Li_2CO_3$, LiF, or $Li_5AlO_4$, become mixed with the graphite. As a result, during the subsequent sorting process of removing the graphite, the lithium compounds are also included, leading to a loss of lithium content carried into subsequent processes and thereby reducing the lithium recovery rate.

### [Disclosure]

### [Technical Problem]

A valuable metal reactant according to an embodiment of the present invention provides a reactant that enables a high recovery rate of valuable metal, specifically lithium, during recovery of the valuable metal in a subsequent process.

A valuable metal shredded material according to another embodiment of the present invention is obtained by shredding the valuable metal reactant having the aforementioned advantage and provides a shredded material having a high recovery rate of valuable metal.

A method for recovering a valuable metal according to still another embodiment of the present invention is a method for recovering a valuable metal having the aforementioned advantage and provides a method for recovering a valuable metal having an excellent recovery rate of valuable metal.

### [Technical Solution]

A valuable metal reactant according to an embodiment of the present invention is a valuable metal reactant including a valuable metal recovered from a waste battery, the valuable metal reactant including a first valuable metal-containing material including a magnetic material, a second valuable metal-containing material including a non-magnetic material, a carbon compound including carbon, and residual other impurities, in which the first valuable metal-containing material includes a third valuable metal-containing material and a first lithium compound attached to a surface of the third valuable metal-containing material, and a lithium content of the first lithium compound is 1.5 wt% or more in the first valuable metal-containing material. In an embodiment, the first lithium compound may include a lithium compound including $LiAlO_2$; and at least one of $Li_2CO_3$, LiF, and $Li_5AlO_4$.

In an embodiment, the second valuable metal-containing material may include a second lithium compound, and a lithium content of the second lithium compound may be less than 20 wt% in the second valuable metal-containing material. In an embodiment, the second lithium compound may include $LiAlO_2$; and at least one of $Li_2CO_3$, LiF, and $Li_5AlO_4$.

In an embodiment, the third valuable metal-containing material may include at least one of cobalt, nickel, and manganese. In an embodiment, the second valuable metal-containing material may include at least one of a second lithium compound, aluminum, aluminum oxide, copper, copper oxide, manganese, and manganese oxide.

A valuable metal shredded material according to another embodiment of the present invention may be produced by shredding the valuable metal reactant described above. In an embodiment, the valuable metal shredded material may have an average particle diameter of 100 to 4000 $\mu$m.

A method for recovering a valuable metal according to still another embodiment of the present invention includes high-temperature reduction of subjecting a battery shredded material to a high-temperature reduction reaction to obtain a valuable metal reactant; magnetic separation of separating the valuable metal reactant into a first valuable metal-containing material including a magnetic material and a second valuable metal-containing material including a non-magnetic material; and first separation of separating the second valuable metal-containing material into a carbon-containing material including carbon and a second lithium compound, in which the first valuable metal-containing material includes a third valuable metal-containing material and a first lithium compound attached to a surface of the third valuable metal-containing material, and a lithium content of the first lithium compound is 1.5 wt% or more in the first valuable metal-containing material.

In an embodiment, the method may further include second separation of separating the first valuable metal-containing material into the third valuable metal-containing material and the first lithium compound.

In an embodiment, the second separation of separating the first valuable metal-containing material into the third valuable metal-containing material and the first lithium compound may include detaching the first lithium compound attached to the surface of the third valuable metal-containing material.

In an embodiment, the second separation may include shredding the first valuable metal-containing material to an average particle diameter of 100 to 4000 $\mu$m. In an embodiment, a lithium content of the second lithium compound may be less than 20 wt% in the second valuable metal-containing material.

In an embodiment, the second valuable metal-containing material may include at least one of aluminum, aluminum oxide, copper, copper oxide, manganese, and manganese oxide. In an embodiment, the third valuable metal-containing material may include an alloy or oxide including at least one of cobalt, nickel, and manganese.

In an embodiment, the first separation may be performed through particle size separation. In an embodiment, the method may further include removing the impurities through particle size separation within a range of 5 to 10 mm after the high-temperature reduction and before the magnetic separation. In an embodiment, the method may further include freezing a battery, which serves as a base material of the battery shredded material, before the high-temperature reduction.

In an embodiment, the freezing a battery may satisfy Formula 1.

<Formula 1>

minimum cooling time (Hr)$=A \times W^{0.33}$

($A = 4 \times e^{(-0.02 \times dT)}$, W = battery weight (Kg), dT= | external cooling temperature - target temperature |, and | | indicates an abslute value)

[Advantageous Effects]

A valuable metal reactant according to an embodiment of the present invention provides a reactant that enables a high recovery rate of valuable metal, specifically lithium, during recovery of the valuable metal in a subsequent process.

A valuable metal shredded material according to another embodiment of the present invention is obtained by shredding the valuable metal reactant having the aforementioned advantage and provides a shredded material having a high recovery rate of valuable metal.

A method for recovering a valuable metal according to still another embodiment of the present invention provides a method for recovering a valuable metal having the advantages described above.

**[Description of the Drawings]**

FIG. 1 is a graph of minimum cooling time according to an embodiment of the present invention.

FIG. 2 is a graph showing a relationship among a battery weight, an external cooling temperature, and a cooling time according to an embodiment of the present invention.

FIGS. 3a and 3b are photographs of a Comparative Example in which a fire occurred when shedding was performed after freezing for a shorter time than the minimum cooling time, and FIGS. 3c and 3d are photographs of an Example in which a fire did not occur when shedding was performed after freezing for a longer time than the minimum cooling time according to an embodiment.

**[Mode for Invention]**

The terms such as first, second and third are used for describing, but are not limited to, various parts, components, regions, layers, and/or sections. These terms are used only to discriminate one part, component, region, layer or section from another part, component, region, layer or section. Therefore, a first part, component, region, layer or section described below may be referred to as a second part, component, region, layer or section without departing from the scope of the present invention.

The technical terms used herein are set forth only to mention specific embodiments and are not intended to limit the present invention. Singular forms used herein are intended to include the plural forms as long as phrases do not clearly indicate an opposite meaning. In the present specification, the term "including (comprising)" is intended to embody specific characteristics, regions, integers, steps, operations, elements and/or components, but is not intended to exclude presence or addition of other characteristics, regions, integers, steps, operations, elements, and/or components.

When a part is referred to as being "above" or "on" another part, it may be directly above or on the other part or an intervening part may also be present. In contrast, when a part is referred to as being "directly above" another part, there is no intervening part present.

Unless otherwise defined, all terms including technical and scientific terms used herein have the same meanings as the meanings generally understood by one skilled in the art to which the present invention pertains. Terms, such as those defined in commonly used dictionaries, are to be interpreted as having meanings consistent with the relevant technical literature and the present disclosure, and are not to be interpreted as having idealized or overly formal meanings unless expressly so defined herein.

Hereinafter, an embodiment of the present invention will be described in detail. However, this is provided as an example, and the present invention is not limited thereto and is defined by the scope of the claims set forth below.

A valuable metal reactant according to an embodiment of the present invention is a valuable metal reactant including a valuable metal recovered from a waste battery, and may include a first valuable metal-containing material including a magnetic material, a second valuable metal-containing material including a non-magnetic material, a carbon compound including carbon, and residual other impurities. The valuable metal reactant refers to a reactant obtained by subjecting a battery shredded material to a high-temperature reduction reaction, performing magnetic separation, and then extracting the carbon compound, for example, graphite, from the second valuable metal-containing material in a method for recovering a valuable metal described below.

In an embodiment, the first valuable metal-containing material may include a third valuable metal-containing material and a first lithium compound attached to a surface of the third valuable metal-containing material. The valuable metal reactant is a reactant generated in a step before shredding the first valuable metal-containing material in the method for recovering a valuable metal described below, and may include the third valuable metal-containing material alone, or the third valuable metal-containing material and the third valuable metal-containing material having the first lithium compound attached to the surface thereof.

In an embodiment, the third valuable metal-containing material in the first valuable metal-containing material may include at least one of cobalt, nickel, and manganese. In an embodiment, the second valuable metal-containing material may include at least one of a second lithium compound, aluminum, aluminum oxide, copper, copper oxide, manganese, and manganese oxide.

In an embodiment, the first lithium compound may be a composition including a lithium compound including $LiAlO_2$, and at least one of $Li_2CO_3$, $LiF$, and $Li_5AlO_4$. In an embodiment, a lithium content of the first lithium compound may be 1.5 wt% or more in the first valuable metal-containing material. Specifically, the lithium content of the first lithium compound may be 1.8 to 9.0 wt%, more specifically 6.21 to 7.39 wt% in the first valuable metal-containing material.

When the lithium of the first lithium compound is included in the first valuable metal-containing material within the specific range, leaching of graphite in a subsequent process has less influence, resulting in a higher lithium recovery rate. If the lithium of the first lithium compound is not included in the first valuable metal-containing material within the specific range, leaching of graphite has a significant influence, resulting in a decrease in the lithium recovery rate.

In an embodiment, the lithium content of the second lithium compound may be less than 20 wt% lithium in the second valuable metal-containing material. Specifically, the lithium content of the second lithium compound may be 9.0 wt% or less, 6.0 wt% or less, and more specifically, 1.45 wt% or less in the second valuable metal-containing material. The lithium content of the second lithium compound may be more than 0% in the second valuable metal-containing material. This is because lithium is bound to be mixed in as the valuable metal-containing material undergoes a classification process after magnetic sorting.

When the lithium content of the second lithium compound in the second valuable metal-containing material satisfies the specific range, there is an advantage in that an amount of the lithium compound lost together with the graphite during the classification can be reduced. If the lithium content of the second lithium compound in the second valuable metal-containing material is outside the specific range, leaching of graphite in a subsequent process has a significant influence, resulting in a decrease in the lithium recovery rate.

A valuable metal shredded material according to another embodiment of the present invention may be produced by shredding the valuable metal reactant described above. Specifically, the valuable metal shredded material may be produced through a shredding step performed to separate a third valuable metal-containing material where a first lithium compound in the first valuable metal-containing material of the valuable metal reactant described above is arranged on a surface thereof.

More specifically, the valuable metal shredded material may include a shredded third valuable metal-containing material and a first lithium compound. In an embodiment, the valuable metal shredded material may have an average particle diameter of 100 to 4000 $\mu$m.

A method for recovering a valuable metal according to another embodiment of the present invention includes a step of subjecting a battery shredded material to a high-temperature reduction reaction, a magnetic separation step of a reactant generated after the high-temperature reduction reaction into a first valuable metal-containing material including a magnetic material and a second valuable metal-containing material including a non-magnetic material, and a first separation step of separating a carbon-containing material including carbon from the valuable metal-containing material in a product obtained after the magnetic separation step.

The battery shredded material refers to a material that serves as a base material of the battery shredded material or a material itself that has been shredded. The base material of the battery shredded material may include a battery that has reached the end of its life, a waste battery, and a waste material generated during a manufacturing process of lithium ion batteries. Specifically, the waste battery may include scrap, jelly roll, and positive electrode materials such as slurry constituting the waste battery, defective products generated during a manufacturing process, residues during the manufacturing process, and generated debris. The base material of the battery shredded material may then be manufactured into battery shredded material via a shredding process.

The material itself that has been shredded may be a shredded product itself, such as a black powder. As such, the battery shredded material is manufactured by recycling waste batteries, providing environmentally friendly and economic benefits.

The step of subjecting the battery shredded material to a high-temperature reduction reaction is a step of putting the battery shredded material into a heating furnace capable of raising a temperature to a high temperature and increasing a temperature of the battery shredded material to a temperature equal to or higher than a melting point. The step of subjecting the battery shredded material to a high-temperature reduction reaction may involve a heat treatment condition for performing a high-temperature reduction reaction without going through a melting step.

In an embodiment, the step of subjecting the battery shredded material to a high-temperature reduction reaction may be performed at a temperature ranging from 1,150 to 1,350°C. In an embodiment, the step of subjecting the battery shredded material to a high-temperature reduction reaction may be performed under a condition of 5 vol% or less of oxygen. Performing the high-temperature reduction reaction under the conditions provides advantages of improving the lithium recovery rate and reducing $CO_2$ emissions.

After the high-temperature reduction reaction, the magnetic separation step of separating the generated reactant (valuable metal-containing material) into a first valuable metal-containing material including a magnetic material and a second valuable metal-containing material including a non-magnetic material is a step of separating the first valuable metal-containing material including a magnetic material and a second valuable metal-containing material including a non-magnetic material, specifically a material not having magnetism, through magnetic separation. The magnetic separation can separate particles by using a magnetic material, for example, by contact with a magnetic material, and various types of magnetic separation methods can be applied.

When the magnetic separation is performed, the first valuable metal-containing material including a magnetic material such as cobalt may be sorted and separated, and a material not including a magnetic material other than the first valuable metal-containing material may be separated as the second valuable metal-containing material.

The first valuable metal-containing material may include a third valuable metal-containing material and a first lithium compound attached to a surface of the third valuable metal-containing material. Specifically, the first valuable metal-containing material may be included as a containing material itself including cobalt, nickel, manganese, or an oxide thereof; or an alloy including at least two or more of cobalt, nickel, and manganese, or an oxide thereof.

In an embodiment, at least a portion of the first valuable metal-containing material may be included as a containing material with the third valuable metal-containing material and the first lithium compound arranged on the surface of the third valuable metal-containing material. Specifically, the first valuable metal-containing material may be composed of a third valuable metal-containing material alone or the first valuable metal-containing material and the first valuable metal-containing material having the first lithium compound arranged on a surface thereof. As such, the first valuable metal-containing material having the first lithium compound arranged on the surface is preferentially sorted through the magnetic separation, thereby offering advantages of preventing the lithium compound from being detached from the first valuable metal-containing material during subsequent particle size separation, thereby increasing the lithium recovery rate.

The second valuable metal-containing material may include at least one of aluminum, aluminum oxide, copper, copper oxide, manganese, and manganese oxide. The second metal-containing material is a valuable metal-containing material including a non-magnetic material and may include a material such as $LiAlO_2$, Cu, and MnO. In an embodiment, the third valuable metal-containing material may include an alloy or oxide including at least one of cobalt, nickel, and manganese. In an embodiment, the first lithium compound may be, for example, $LiAlO_2$, which is a lithium aluminum oxide.

The first separation step of separating a carbon-containing material including carbon and a second lithium compound from the second valuable metal-containing material obtained after the magnetic separation step includes a step of separating a carbon-containing material, specifically, graphite, from the second valuable metal-containing material including a non-magnetic material obtained after the magnetic separation step. In an embodiment, the step of separating graphite may be performed through either particle size separation or gravity separation.

In an embodiment, either the particle size separation or the gravity separation may be performed using a means such as a cyclone or a floatation device. Specifically, to separate the graphite, the separation may be performed based on 100 μm. The graphite may be separated through particle size separation within a range of 100 μm or less.

As such, after the magnetic separation step, the obtained second valuable metal-containing material is subjected to a classification process to separate the graphite separately, thereby solving the problem of lithium loss caused by inclusion of fine lithium compounds during the processes of removing and sorting graphite, compared to a case where the process of separating the graphite is performed first, thereby offering an advantage of increasing an amount of lithium supplied in a subsequent process.

As described above, in the reactant obtained by separately classifying and separating the graphite after the magnetic separation, the lithium content of the first lithium compound may be 1.5 wt% or more in the first valuable metal-containing material. Specifically, the lithium content of the first lithium compound may be 6 wt% or more in the first valuable metal-containing material.

As described above, the magnetic separation step is performed prior to the classification step, so that the third valuable metal-containing material where the first lithium compound in the first valuable metal-containing material is arranged on the surface is simultaneously recovered. This reduces the influence of leaching of graphite in the subsequent process, thereby offering the advantage of increasing the lithium recovery rate.

In an embodiment, the lithium content of the second lithium compound may be less than 20 wt% lithium in the second valuable metal-containing material. Specifically, the lithium content of the second lithium compound may be 17 wt% or less, more specifically 9 wt% or less, even more specifically 6.0 wt% or less, further specifically 5.0 wt% or less, and most specifically 1.45 wt% or less in the second valuable metal-containing material.

As described above, after the magnetic separation step, the obtained second valuable metal-containing material is subjected to a classification process to separate the graphite separately, thereby solving the problem of lithium loss caused by inclusion of fine lithium compounds during the processes of removing and sorting graphite, compared to a case where the process of separating the graphite is performed first, thereby offering an advantage of increasing an amount of lithium supplied in a subsequent process.

In addition, the second lithium compound can prevent the problem of reducing the lithium recovery rate of the second lithium compound in the subsequent process by containing a large amount of lithium compound in the additional sorting process for removing the graphite.

In an embodiment, the method may include a second separation step of separating the first valuable metal-containing material into the third valuable metal-containing material and the first lithium compound after the step of the carbon-containing material including carbon and the second lithium compound from the product (valuable metal-containing material) obtained after the magnetic separation step.

The second separation step is a step of separating the third valuable metal-containing material and the first lithium compound from the first valuable metal-containing material by a mechanical or physical external force, and can separate an alloy or oxide including at least one of nickel, cobalt, and manganese, and a lithium compound, for example, $LiAlO_2$ arranged on the surface of the valuable metal-containing material.

The second separation step is a method of separating the third valuable metal-containing material and the first lithium compound by applying an external force, such as shredding, to the first valuable metal-containing material and can separate the third valuable metal-containing material and the first lithium compound. The second separation step is not limited to the above-described shredding method, and various methods may be utilized as long as they can separate the third valuable metal-containing material and the first lithium compound through an external force. As such, separating the lithium compound through the physical external force offers the advantage of increasing the recovery rate of lithium as well as valuable metals such as nickel, cobalt, and manganese.

In an embodiment, the second separation step of shredding the first valuable metal-containing material to separate it into the third valuable metal-containing material and the first lithium compound may include a step of shredding the first valuable metal-containing material to an average particle diameter ranging from 100 to 4000 $\mu$m. Specifically, the shredding step may include a step of shredding to an average particle diameter ranging from 100 to 1000 $\mu$m. By undergoing the shredding step to the aforementioned range, an advantage is offered in that the lithium content of the first valuable metal-containing material attached on the surface of the third valuable metal-containing material including NCM is high.

If the shredding is performed outside the upper limit of the above range in the second separation step, the size of the Ni-Co-Mn-containing alloy generated during the high-temperature heat treatment of the shredded material increases, thereby increasing a leaching time in a subsequent hydrometallurgical process. If the shredding is performed outside the lower limit of the above range in the second separation step, the size of the alloy generated during the high-temperature heat treatment of the shredded material of 100 $\mu$m or less becomes small, so that graphite is separated together during magnetic sorting, and the process is delayed due to the interference problem caused by graphite that does not dissolve in acid during the leaching process.

In an embodiment, the second separation step of shredding the first valuable metal-containing material to separate it into a third valuable metal-containing material and a first lithium compound may be performed after the magnetic separation step of separating the generated reactant (valuable metal-containing material) into the first valuable metal-containing material including a magnetic material and the second valuable metal-containing material including a non-magnetic material after the high-temperature reduction reaction described above. The second separation step may be performed, for example, between the magnetic separation step and the graphite separation step, or may be performed after the magnetic separation step and the graphite separation step. The second separation step performed after the magnetic separation step offers an advantage of preventing agglomeration of clumps such as flakes.

In an embodiment, the method may further include a step of removing impurities after the high-temperature reduction reaction and before the magnetic separation step of separating the generated reactant (valuable metal-containing material) into a first valuable metal-containing material including a magnetic material and a second valuable metal-containing material including a non-magnetic material. The impurities may be, for example, impurities such as iron pieces and flakes.

In an embodiment, the step of removing impurities may be performed through any one of magnetic sorting, particle size separation, and gravity separation. The magnetic sorting may be performed by utilizing a magnetic body having a magnetic field strength capable of separating iron pieces from valuable metal-containing materials, such as NCM alloys. The particle size separation may separate iron pieces through particle size control. Specifically, the particle size separation may be performed based on a particle size, represented by an average particle diameter, for example, within a range of 5 to 10 mm or larger.

By preferentially removing impurities before the magnetic separation, an advantage is offered in that the recovery rate of valuable metals can be increased by removing impurities that may affect magnetic separation.

In an embodiment, prior to the step of subjecting the battery shredded material to a high-temperature reduction reaction, the battery shredded material may be subjected to a step of freezing a battery, followed by a step of shredding the frozen battery. By freezing the battery shredded material prior to the shredding, battery ignition during the shredding process can be prevented.

The step of freezing a battery is performed at a temperature sufficient to freeze an electrolyte included inside the battery. Specifically, the freezing step may be performed within a temperature range of, for example, -150 to -20°C. More specifically, the freezing step may be performed within a temperature range of, for example, -150 to -50°C, and more specifically, -80 to -60°C.

When the battery is frozen within the specific temperature range, the slightly remaining voltage inside the battery, for example, about 2 V to 3 V, is lowered to nearly 0 V. Accordingly, even when a short circuit occurs in which a positive electrode and a negative electrode are in direct contact, no battery reaction occurs, and thus the battery temperature does not increase, so that gas generation and combustion of the electrolyte do not occur. In addition, since the electrolyte is in a frozen state or in a state where vaporization is suppressed, the mobility of lithium ions is very low, so that the conduction characteristics associated with migration of lithium ions may be significantly reduced. In addition, since vaporization of the electrolyte does not occur, flammable gases such as ethylene, propylene, and hydrogen may not be generated.

If the freezing process is outside the temperature range, for example, if the battery is cooled to a temperature higher than -60°C is performed, the remaining voltage inside the battery does not decrease to 0 V, which may cause a battery reaction caused by a short circuit, and the electrolyte is not completely frozen, which is not appropriate. In addition, when the battery is cooled to - 150°C, the electrolyte is sufficiently frozen and the internal voltage of the battery also decreases to 0 V, so there is no need to lower the temperature below this. As such, the battery processing method includes the freezing step before shredding a battery such as a lithium secondary battery, thereby offering the advantage of preventing the risk of fire that may occur during the battery shredding process.

The step of shredding the frozen battery may refer to a process of applying an impact or pressure to the battery so that a portion of the battery is broken off. In an embodiment, the step of shredding the battery may refer to any of a process of crushing the battery, a process of cutting the battery, a process of compressing the battery, or a combination thereof. Specifically, the shredding step may include any process that can fracture the battery to obtain small-sized shredded materials.

In an embodiment, the step of shredding the battery may include any process that compresses the frozen battery or fractures the battery by applying an external force, such as a shear force or a tensile force. The step of shredding the above battery may be performed, for example, using a shredder.

In an embodiment, the step of shredding the battery may be performed at least once. Specifically, the shredding step may be performed at least once continuously or discontinuously.

In an embodiment, the step of shredding the battery may be performed under conditions of supplying an inert gas, carbon dioxide, nitrogen, water, or a combination thereof or vacuum conditions of 100 torr or less. For example, in the case where the process of freezing a battery is performed within a temperature range of -60 to -20°C, when the shredding step is performed under the conditions described above, the supply of oxygen can be suppressed, preventing the electrolyte from reacting with oxygen and thereby preventing an explosion. In addition, the vaporization of the electrolyte can be suppressed, preventing generation of flammable gases such as ethylene, propylene, or hydrogen.

In an embodiment, the step of shredding a battery may be performed such that a maximum size of the battery shredded material becomes 100 mm or less. Specifically, the step of shredding a battery may be performed such that a size of the battery shredded material becomes 50 mm or less. If the maximum size of the battery shredded material becomes 100 mm or greater, the temperature of heat generated due to instability as the battery shredded material is shredded increases to a temperature region of 120°C, which is an average vaporization temperature of the electrolyte solution, potentially causing stability issues such as fire.

In an embodiment, the step of freezing a battery may satisfy Formula 1.

<Formula 1>

$$\text{minimum cooling time (Hr)} = A \times W^{0.33}$$

($A = 4 \times e^{(-0.02 \times dT)}$, W = battery weight (Kg), dT = | external cooling temperature - target temperature |, and || indicates an abslute value)

The W in Formula 1 above refers to a weight of a battery, for example, a weight of a battery pack, a single battery, or a combination thereof. The minimum cooling time refers to an external cooling temperature, which is a cooling temperature applied to the battery, for example, a target temperature for cooling an electrolyte solution inside the battery.

The step of freezing a battery is performed for a time equal to or longer than the minimum cooling time to cool the electrolyte solution inside the battery, thereby offering an advantage of enabling stable subsequent processes. If the battery is frozen for a time shorter than the minimum cooling time during the step of freezing a battery, the electrolyte solution is not cooled, potentially causing a risk of fire during the shredding process.

Below, preferred Examples of the present invention and Comparative Examples will be described. However, the following Examples are only preferred examples of the present invention, and the present invention is not limited to the following Examples.

**<Battery Internal Temperature Depending on Minimum Freezing Time>**

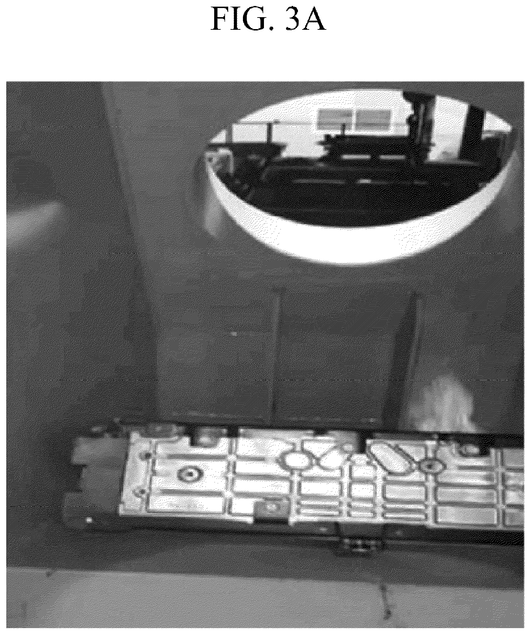

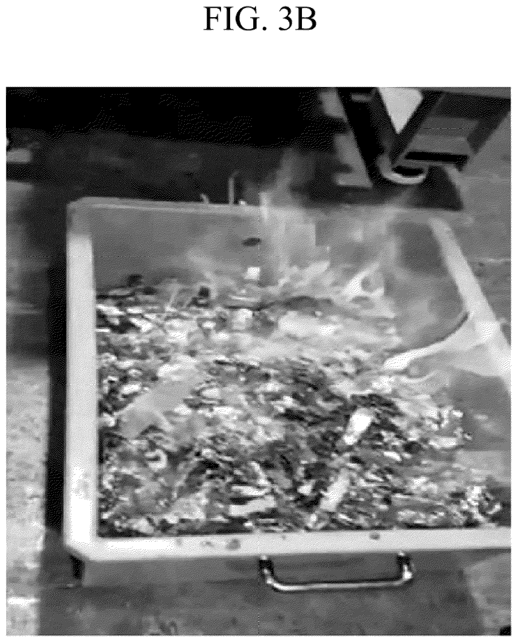

The battery pack used in the example was shredded without freezing using the same shredder as in the example. During the shredding process, a flame occurred due to a short circuit, as shown in FIGS. 3a and 3b.

As such, it can be confirmed through the example and comparative example that performing the step of freezing the battery pack including the battery before shredding the battery prevents short circuits flame generation during the battery shredding step, thereby ensuring excellent stability.

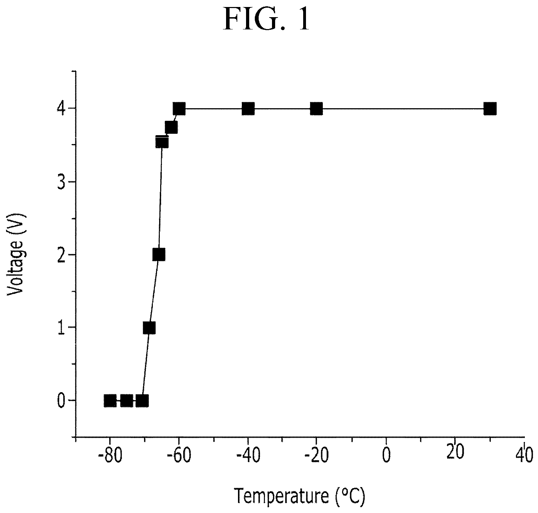

FIG. 1 shows a change in voltage of a battery depending on the cooling temperature in accordance with an embodiment of the present invention.

Referring to FIG. 1, when the battery voltage is measured while freezing the battery to -80°C, the battery pack shows substantially the same voltage up to the high temperature of about 40°C, the room temperature, and -60°C, which

**EP 4 632 089 A1**

confirming that the battery characteristics are not lost. It was confirmed that when the temperature was lowered from -60°C to -70°C, the voltage dropped sharply and becomes 0 V below -70°C. As such, it was confirmed that, when the battery is frozen to -60 to -150°C, no short circuit occurred.

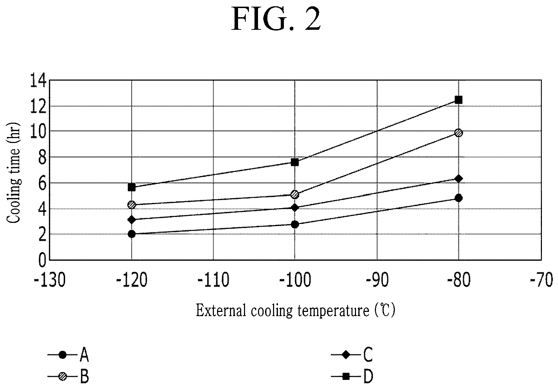

FIG. 2 is a graph showing a relationship among a battery weight, an external cooling temperature, and a cooling time according to an embodiment of the present invention.

Referring to FIG. 2, it can be confirmed that the battery processing method according to an embodiment of the present invention can derive the minimum cooling time for cooling a battery in the step of freezing the battery. Specifically, it can be confirmed that the minimum cooling time is associated with the battery weight, the external cooling temperature, and the target temperature. Specifically, FIG. 2 shows the external cooling temperature and the minimum cooling time when the target temperature is set to -70°C and the battery weights are 2.5 kg (A), 10 kg (B), 20 kg (C), and 50 kg (D), respectively. It can be confirmed that, when cooling the battery, the electrolyte solution of the battery begins to cool after a predetermined time and reaches a state where the voltage becomes 0 V. With this, it can be confirmed that when cooling the battery, the minimum maintenance time is required to sufficiently cool the inside of the battery, specifically the electrolyte solution.

Specifically, in a heat transfer situation for cooling where heat is lost to the outside, when considering the specific heat of the battery itself, it can be confirmed that the weight of the battery and the time for cooling are required. As such, in the present invention, the minimum time required for cooling can be determined by using the external cooling temperature for freezing so as to cool the battery, the target temperature, and the battery weight.

Table 1 below lists the minimum cooling time depending on the battery weight and external cooling temperature.

[Table 1]

|  | Battery weight [Kg] | External cooling temperature [°C] | Target temperature [°C] | Formula 1 | Minimum cooling time [h] |
|---|---|---|---|---|---|
| A_1 | 2.5 | -120 | -70 | 1.9 | 1.9 |
| A_2 | 2.5 | -100 | -70 | 2.9 | 2.9 |
| A_3 | 2.5 | -80 | -70 | 4.4 | 4.4 |
| B_1 | 10 | -120 | -70 | 3.1 | 3.1 |
| B_2 | 10 | -100 | -70 | 4.6 | 4.6 |
| B_3 | 10 | -80 | -70 | 7.0 | 7.0 |
| C_1 | 20 | -120 | -70 | 3.9 | 3.9 |
| C_2 | 20 | -100 | -70 | 5.8 | 5.8 |
| C_3 | 20 | -80 | -70 | 8.8 | 8.8 |
| D_1 | 50 | -120 | -70 | 5.3 | 5.3 |
| D_2 | 50 | -100 | -70 | 7.9 | 7.9 |
| D_3 | 50 | -80 | -70 | 11.9 | 11.9 |

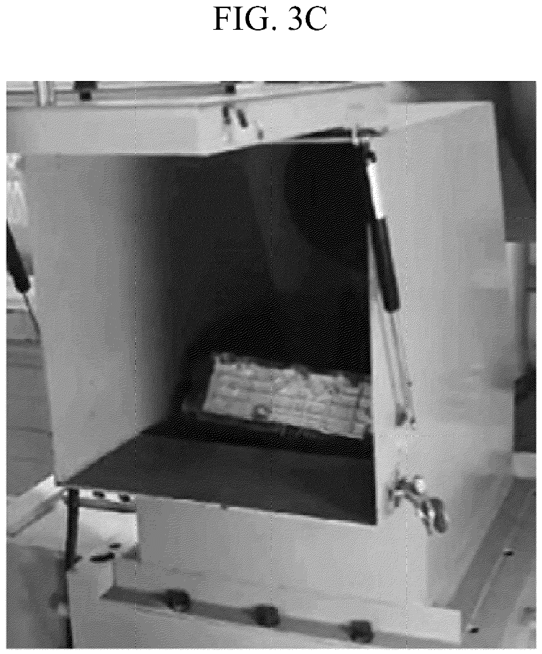

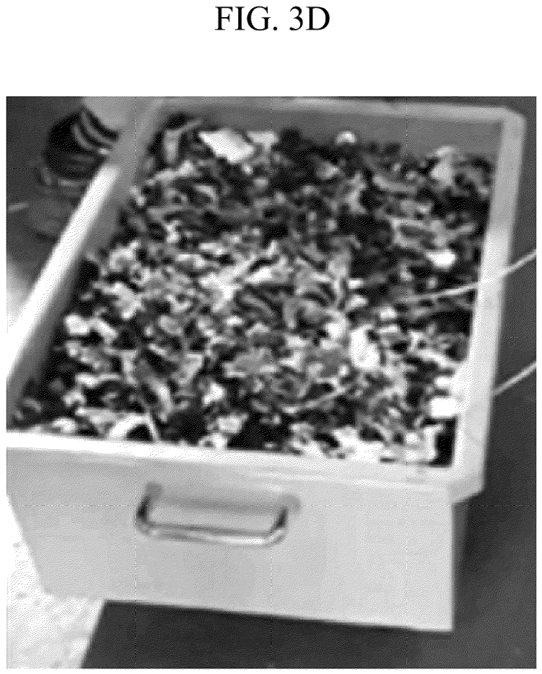

Seeing Table 1 above, it can be confirmed that the smaller the battery weight, the shorter the minimum cooling time required to cool the battery. In addition, it can be confirmed that when the battery is cooled for the minimum cooling time having the value of Formula 1 derived from the relationship according to the battery weight, external cooling temperature, and target temperature, the battery, specifically, the electrolyte solution of the battery, is cooled. In addition, when the battery is cooled for a time equal to or longer than the value of Formula 1, no fire occurs during the subsequent process, that is, the battery shredding process. FIGS. 3a and 3b are photographs showing a fire that occurred when shredding was performed after freezing for a shorter time than the minimum cooling time according to a comparative example of the present invention, and FIGS. 3c and 3d are photographs of an example in which a fire did not occur when shredding was performed after freezing for a longer time than the minimum cooling time according to an example of the present invention.

Referring to FIGS. 3a and 3b, the fire occurrence status of the shredded material was tested when the battery was frozen for a shorter time than the minimum cooling time required for cooling. The test was conducted for 5 hours shorter than 7 hours, which was a value of Formula 1 when the battery weight was 25 kg, the external cooling temperature was -95°C, and the target freezing temperature was -70°C.

<Formula 1>

$$\text{minimum cooling time} = A \times W^{0.33}$$

($A = 4 \times e^{(-0.02 \times dT)}$, W = battery weight (Kg), dT = | external cooling temperature - target temperature |, and | | indicates an abslute value)

Referring to FIGS. 3c and 3d, the fire occurrence status of the shredded material was tested when the battery was frozen for a time equal to or longer than the minimum freezing time required for cooling. In the test, the same battery weight, external cooling temperature, and minimum freezing time of 7 hours or longer as in FIGS. 3a and 3b were used.

Table 2 below compares the fire occurrence statuses of the example and comparative example of FIGS. 3a to 3d depending on the same battery weight, external cooling temperature, and minimum freezing time. The determination of the fire occurrence status was recorded as "O" when a fire was observed after the battery was shredded, and as "X" when no fire was observed.

[Table 2]

| | Battery weight [Kg] | External cooling temperature [°C] | Target temperature [°C] | Formula 1 | Actual cooling time [h] | Fire occurrence |
|---|---|---|---|---|---|---|
| Comparative Example | 25 | -95 | -70 | 7.0 | 5 | ○ |
| Example | 25 | -95 | -70 | 7.0 | 7 | X |

Seeing Table 2 above, it can be confirmed that when the battery was cooled for a time smaller than the value of Formula 1 corresponding to the minimum cooling time, the electrolyte was not cooled, resulting in a fire after the battery was shredded. As such, it can be confirmed that when the battery is cooled for the minimum cooling time set by the value of Formula 1, the shredded material can be stably utilized without a fire after the battery is shredded.

**<Firing Heat Treatment For Battery Shredded Material>**

The step of subjecting the battery shredded material to a firing heat treatment was performed as a dry heat treatment under conditions of 5 vol% or less of oxygen within a temperature range of 1,150 to 1,350°C. Specifically, the firing heat treatment in this test was performed as a dry heat treatment under conditions of about 3 vol% or less of oxygen within a temperature range of 1,250 to 1,300°C, specifically about 1,250°C.

After the dry heat treatment, the size of the prepared battery shredded material was 10 to 20 mm based on the long axis among the width, length, and height, the graphite content was 5% or more, and the impurity content of plastic or iron pieces such as Al cover and PCB substrate of the shredded material was less than 5%.

**<Control of Recovery Method of Valuable Metal Reactant>**

After the high-temperature reduction reaction, the components included in the prepared product include an NCM alloy, a lithium compound, graphite, and other residual impurities such as copper and aluminum.

**Comparative Example**

After the high-temperature reduction reaction, the prepared product was classified to extract graphite, and then magnetic sorting was performed.

**Example**

After the high-temperature reduction reaction, the prepared product was subjected to magnetic sorting, the valuable metal-containing material including a magnetic material and the valuable metal-containing material including a non-magnetic material were separated, and additional shredding and sorting processes were performed in consideration of the components of each of the magnetic and non-magnetic materials. Then, graphite was extracted through classification.

Table 3 below shows the lithium content in graphite according to the order of graphite classification and magnetic separation.

[Table 3]

| Classification | Sorting process | Lithium content in graphite [%] | Lithium recovery rate during leaching [%] |
|---|---|---|---|
| Comparative Example | Magnetic sorting after classification | 7.41 | 28 |
| Example | Classification after magnetic sorting | 0.66 | 71 |

Seeing Table 3, it was confirmed that when the magnetic sorting step is performed prior to the classification step, as in the example, the third valuable metal-containing material where the first lithium compound in the first valuable metal-containing material is arranged on the surface thereof is simultaneously recovered, offering an advantage for lithium recovery. It was confirmed that when the classification step is performed prior to the magnetic sorting step, as in the comparative example, the first lithium compound included in the first valuable metal-containing material is separated together with graphite, thereby making lithium recovery difficult. Since graphite does not dissolve when leached in acid, it undergoes a separate separation process. During this process, lithium is also separated, which reduces the lithium recovery rate during the leaching process.

Table 4 below shows the contents of recovered reactants according to the order of the graphite classification and magnetic separation, categorized by magnetic properties.

[Table 4]

| Experimental Examples | Categorized by magnetic properties | Categorization | Ni-Co-Mn [wt%] | Li [wt%] | C [wt%] | Lithium recovery rate (%) after leaching |
|---|---|---|---|---|---|---|
| Comparative Example 1 | First valuable metal-containing material | Magnetic sorting after classification | 96.66 | 0.84 | 2.5 | 78 |
| Comparative Example 2 | First valuable metal-containing material | | 95.33 | 1.07 | 3.6 | 76 |
| Comparative Example 1 | Secondary valuable metal-containing material | | 0.51 | 9.01 | 90.5 | 12 |
| Comparative Example 2 | Secondary valuable metal-containing material | | 0.97 | 10.87 | 88.2 | 8 |
| Example 1 | First valuable metal-containing material | Classification after magnetic sorting | 89.41 | 7.39 | 3.2 | 81 |
| Example 2 | First valuable metal-containing material | | 88.59 | 6.21 | 5.2 | 79 |
| Example 1 | Secondary valuable metal-containing material | | 2.63 | 0.57 | 96.8 | 8 |
| Example 2 | Secondary valuable metal-containing material | | 1.27 | 1.45 | 97.3 | 11 |

Seeing Table 4 above, it was confirmed that the composition ratio of Ni-Co-Mn, Li, and C, which are the components of the input shredded material, after high-temperature reduction reaction was different depending on whether the magnetic sorting was performed after the classification or the classification was performed after the magnetic sorting, as shown in Table 4. As in the comparative examples, when the classification was preferentially performed, the lithium content in the first valuable metal-containing material of Comparative Example 1 or 2 was about 0.8 to 1.1 wt%, specifically 0.84 wt% and 1.07 wt%. When the magnetic sorting was preferentially performed, the lithium content in the first valuable metal-containing material of Example 1 or 2 was about 6 to 8 wt%, specifically 6.21 wt% and 7.39 wt%. Therefore, it was confirmed that when the classification was performed after the magnetic sorting, the loss of lithium compounds was smaller and the lithium content in the first valuable metal-containing material was high, at 1.5 wt% or more.

Specifically, it was confirmed that the lithium content in the second valuable metal-containing material of Comparative Example 1 or 2 was about 9 to 11 wt%, and that the lithium content in the second valuable metal-containing material of Example 1 or 2 was about 0.5 to 1.5 wt%, specifically, about 0.57 wt% and 1.45 wt%, which was about 6 to 20 times lower.

It was confirmed that the content of Ni-Co-Mn in the second metal-containing materials of the comparative examples and examples was at a similar level of 0.5 to 3 wt%.

In contrast, the content of graphite in the second metal-containing material of the comparative examples was reduced by about 10% compared to the examples. This is considered to be due to the detachment and dispersion of a portion of the Li compound attached to the magnetic material during the classification. As can be seen in Table 4, in the case of lithium compounds mixed with graphite, the lithium recovery rate may be reduced due to the decreased leaching efficiency caused by the high graphite content during the acid leaching process.

**<Shredding Step of First Valuable Metal-Containing Material>**

The first valuable metal-containing material separated through the magnetic separation was shredded within a range of 500 to 1000 $\mu$m through an attrition mill, thereby separating the NCM alloy and $LiAlO_2$, which was a lithium compound attached to the surface of the NCM alloy. The composition ratios of the NCM alloy and the lithium compound are shown in Table 5 below.

[Table 5]

| First valuable metal-containing material | After shredding separation | Li [wt%] | Ni [wt%] | Co [wt%] | Mn [wt%] | Al [wt%] | O [wt%] | Sum [wt%] |
|---|---|---|---|---|---|---|---|---|
| Particle size 500 to 1000 $\mu$m | First lithium compound | 14.63 | 1.24 | 0.42 | 1.89 | 34.47 | 47.36 | 100 |
| | Third valuable metal-containing material | 1.08 | 59.24 | 19.36 | 16.80 | 1.22 | 2.31 | 100 |

Seeing Table 5 above, it shows wt% of the main components when the first valuable metal-containing material was shredded to a particle size of 500 to 1000 $\mu$m. In the shredding step, it was confirmed that the Li content of the first lithium compound attached to the surface of the third valuable metal-containing material including NCM was high when shredded to the particle size of 500 to 1000 $\mu$m. With this, it can be confirmed that the Li content of the reactant included in the subsequent processes will increase when the first lithium compound is separated after shredding the first valuable metal-containing material. In addition, when applied to the subsequent processes, the first lithium compound is mixed with only a trace amount of graphite, so a separate graphite sorting step is not required, which is expected to shorten the processing process and improve economic feasibility.

While this invention has been described in connection with what is presently considered to be practical exemplary embodiments, it is to be understood that the invention is not limited to the disclosed exemplary embodiments. On the contrary, it is intended to cover various modifications and equivalent arrangements included within the spirit and scope of the appended claims.

**Claims**

1. A valuable metal reactant comprising a valuable metal recovered from a waste battery, the valuable metal reactant comprising:

   a first valuable metal-containing material comprising a magnetic material;
   a second valuable metal-containing material comprising a non-magnetic material;
   a carbon compound comprising carbon; and
   residual other impurities, wherein
   the first valuable metal-containing material comprises a third valuable metal-containing material and a first lithium compound attached to a surface of the third valuable metal-containing material, and
   a lithium content of the first lithium compound is 1.5 wt% or more in the first valuable metal-containing material.

2. The valuable metal reactant of claim 1, wherein:
the first lithium compound comprises a lithium compound comprising $LiAlO_2$; and at least one of $Li_2CO_3$, LiF, and $Li_5AlO_4$.

3. The valuable metal reactant of claim 1, wherein:

the second metal-containing material comprises a second lithium compound, and
a lithium content of the second lithium compound is less than 20 wt% in the second valuable metal-containing material.

4. The valuable metal reactant of claim 3, wherein:
the second lithium compound comprises a lithium compound comprising LiAlO2, and at least one of $Li_2CO_3$, LiF, and $Li_5AlO_4$.

5. The valuable metal reactant of claim 1, wherein:
the third valuable metal-containing material comprises at least one of cobalt, nickel, and manganese.

6. The valuable metal reactant of claim 1, wherein:
the second valuable metal-containing material comprises at least one of a second lithium compound, aluminum, aluminum oxide, copper, copper oxide, manganese, and manganese oxide.

7. A valuable metal shredded material produced by shredding the valuable metal reactant of any one of claims 1 to 6.

8. The valuable metal shredded material of claim 7, wherein:
the valuable metal shredded material has an average particle size of 100 to 4000 $\mu m$.

9. A method for recovering a valuable metal comprising:

high-temperature reduction of subjecting a battery shredded material to a high-temperature reduction reaction to obtain a valuable metal reactant;
magnetic separation of separating the valuable metal reactant into a first valuable metal-containing material comprising a magnetic material and a second valuable metal-containing material comprising a non-magnetic material; and
first separation of separating the second valuable metal-containing material into a carbon-containing material comprising carbon and a second lithium compound, wherein
the first valuable metal-containing material comprises a third valuable metal-containing material and a first lithium compound attached to a surface of the third valuable metal-containing material, and
a lithium content of the first lithium compound is 1.5 wt% or more in the first valuable metal-containing material.

10. The method of claim 9, further comprising:
second separation of separating the first valuable metal-containing material into the third valuable metal-containing material and the first lithium compound.

11. The method of claim 10, wherein:
the second separation comprises detaching the first lithium compound attached to the surface of the third valuable metal-containing material.

12. The method of claim 10, wherein:
the second separation comprises shredding the first valuable metal-containing material to an average particle diameter of 100 to 4000 $\mu m$.

13. The method of claim 9, wherein:
a lithium content of the second lithium compound is less than 20 wt% in the second valuable metal-containing material.

14. The method of claim 9, wherein:
the second valuable metal-containing material comprises at least one of aluminum, aluminum oxide, copper, copper oxide, manganese, and manganese oxide.

15. The method of claim 9, wherein:
the third valuable metal-containing material comprises an alloy or oxide comprising at least one of cobalt, nickel and manganese.

16. The method of claim 9, wherein:
the first separation is performed through particle size separation.

17. The method of claim 9, further comprising:
removing the impurities through particle size separation within a range of 5 to 10 mm after the high-temperature reduction and before the magnetic separation.

18. The method of claim 9, further comprising:
freezing a battery, which serves as a base material of the battery shredded material, before the high-temperature reduction.

19. The method of claim 18, wherein:
the freezing a battery satisfies Formula 1:

<Formula 1>

$$\text{minimum cooling time (Hr)} = A \times W^{0.33}$$

($A = 4 \times e^{(-0.02 \times dT)}$, W = battery weight (Kg), dT = | external cooling temperature - target temperature |, and | | indicates an abslute value)

FIG. 1

# FIG. 2

# FIG. 3A

FIG. 3B

# FIG. 3C

# FIG. 3D

## INTERNATIONAL SEARCH REPORT

| International application No. |
| --- |
| **PCT/KR2023/019941** |

| A. | CLASSIFICATION OF SUBJECT MATTER |
| --- | --- |

**C22B 7/00**(2006.01)i; **C22B 26/12**(2006.01)i; **C22B 5/02**(2006.01)i

According to International Patent Classification (IPC) or to both national classification and IPC

| B. | FIELDS SEARCHED |
| --- | --- |

Minimum documentation searched (classification system followed by classification symbols)

C22B 7/00(2006.01); B02C 19/00(2006.01); C22B 3/06(2006.01); H01M 10/052(2010.01); H01M 10/54(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐전지(waste battery), 유가 금속(valuable metal), 회수(recovery), 파쇄(fracturing), 자성(magnetic), 입도(particle size), 리튬(Li)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-064855 A (DOWA ECO-SYSTEM CO., LTD.) 23 April 2020 (2020-04-23)<br>See paragraphs [0001], [0009]-[0011], [0020], [0027], [0029], [0040]-[0043] and [0046], figure 1 and table 1. | 1-17 |
| Y | | 18,19 |
| Y | KR 10-2022-0135176 A (POSCO) 06 October 2022 (2022-10-06)<br>See claim 1. | 18,19 |
| A | KR 10-2014-0126943 A (TOWN MINING CO., LTD.) 03 November 2014 (2014-11-03)<br>See paragraphs [0037]-[0043]. | 1-19 |
| A | KR 10-1883100 B1 (INDUSTRY-ACADEMIC COOPERATION FOUNDATION, YONSEI UNIVERSITY) 27 July 2018 (2018-07-27)<br>See paragraphs [0022]-[0032] and figure 1. | 1-19 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 March 2024** | **12 March 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/019941**

C.     **DOCUMENTS CONSIDERED TO BE RELEVANT**

| Category* | Citation of document, with indication, where appropriate, of the relevant passages | Relevant to claim No. |
|---|---|---|
| A | US 2021-0194075 A1 (YAU FU INDUSTRY CO., LTD.) 24 June 2021 (2021-06-24)<br>  See claims 1-9. | 1-19 |

INTERNATIONAL SEARCH REPORT
Information on patent family members

| International application No. |
| --- |
| **PCT/KR2023/019941** |

| Patent document cited in search report | | | Publication date (day/month/year) | Patent family member(s) | | | Publication date (day/month/year) |
| --- | --- | --- | --- | --- | --- | --- | --- |
| JP | 2020-064855 | A | 23 April 2020 | JP | 6748274 | B2 | 26 August 2020 |
| KR | 10-2022-0135176 | A | 06 October 2022 | EP | 4318733 | A1 | 07 February 2024 |
| | | | | WO | 2022-211446 | A1 | 06 October 2022 |
| KR | 10-2014-0126943 | A | 03 November 2014 | KR | 10-1497041 | B1 | 02 March 2015 |
| KR | 10-1883100 | B1 | 27 July 2018 | | None | | |
| US | 2021-0194075 | A1 | 24 June 2021 | US | 11316214 | B2 | 26 April 2022 |

Form PCT/ISA/210 (patent family annex) (July 2022)